# EUROPÄISCHE PATENTSCHRIFT

(11) **EP 3 033 251 B1**
(45) Veröffentlichungstag und Bekanntmachung des Hinweises auf die Patenterteilung: **03.01.2018**
(21) Anmeldenummer: 14748204.6
(22) Anmeldetag: 05.08.2014
(51) Int. Cl.: B60R 25/20, G06F 3/01

(54) **SENSORANORDNUNG ZUR ERFASSUNG VON BEDIENGESTEN AN FAHRZEUGEN**
SENSOR ARRANGEMENT FOR DETECTING COMMAND GESTURES FOR VEHICLES
DISPOSITIF DE CAPTEUR POUR DÉTECTER DES COMMANDES GESTUELLES POUR VÉHICULES

(30) Priorität: 14.08.2013 DE 102013108824
(43) Veröffentlichungstag der Anmeldung: 22.06.2016
(73) Patentinhaber: Huf Hülsbeck & Fürst GmbH & Co. KG, 42551 Velbert (DE)
(72) Erfinder: STICHERLING, Nadine, 42555 Velbert (DE)
(74) Vertreter: Zenz Patentanwälte Partnerschaft mbB
(86) Internationale Anmeldenummer: PCT/EP2014/066843
(87) Internationale Veröffentlichungsnummer: WO 2015/022240

(56) Entgegenhaltungen:
- WO-A1-2013/001084
- WO-A2-2008/116699
- DE-A1-102008 025 669
- US-A1- 2011 295 469

## Beschreibung

Die Erfindung betrifft Sensoranordnungen, welche zur optisch gestützten Erkennung von Bedienungsgesten oder Bedienungshandlungen an Kraftfahrzeugen eingesetzt werden.

Insbesondere betrifft die Erfindung Sensoranordnungen, welche zeitlich und räumlich aufgelöste optische Informationen erfassen und auswerten können, um den Bedienwillen eines Benutzers zu erkennen.

Im Stand der Technik sind optische Verfahren bekannt, die Betätigungen in Reaktion auf eine Auswertung von Bildinformationen erkennen und daraufhin z.B. Schaltvorgänge auslösen. Beispielsweise sind hier automatische Videoauswertungen von Überwachungssystemen zu nennen, welche Muster oder Bewegungen aus einzelnen Bildern oder einer Folge von Bilder herauslesen. Außerdem sind zahlreiche andere optisch gestützte Systeme bekannt, wobei zu den grundlegendsten davon Lichtschranken oder Helligkeitssensoren gehören. Optische Systeme mit höherer Komplexität bedienen sich jedoch oft eines Rasters oder Arrays von optisch sensitiven Erfassungseinheiten, meist als Pixel bezeichnet, die parallel optische Informationen aufnehmen, beispielsweise in Gestalt eines CMOS-Arrays.

Die DE 10 2008 025 669 A1 offenbart einen optischen Sensor, welcher eine Geste detektiert, woraufhin ein Schließelement eines Fahrzeugs automatisch bewegt wird.

Die WO 2008/116699 A2 betrifft einen optischen Sensorchip und bezieht sich auf eine optische Einklemmschutzvorrichtung für die Überwachung einer Fensterscheibe, Schiebetür oder einer Heckklappe in einem Kraftfahrzeug.

Die WO 2012/084222 A1 offenbart einen optischen Sensor zur Betätigung und Überwachung eines Schließelements.

Da die Gestensteuerung in vielen technischen Bereichen der Benutzerinteraktion immer größere Akzeptanz erfährt, wurden auch Versuche unternommen, solche rein optischen Systeme zur Erkennung des Bedienwunsches bei Kraftfahrzeugen zu verwenden. Bei diesen Systemen herrscht jedoch weiterhin die Erfassung von Bedienungen über kapazitive Systeme vor.

Die DE 10 2011 089 195 A1 und die WO 2013/001084 A1 offenbaren ein System zur berührungslosen Erfassung von Gegenständen und Bediengesten mit einer optisch gestützten Einrichtung ähnlicher Art, wie sie auch für die Erfindung einsetzbar ist. WO2013/001084A1 offenbart eine Sensoreinrichtung nach dem Oberbegriff des Anspruchs 1. Die US 2011/0295469 A1 offenbart ein Verfahren zur berührungslosen Hinderniserkennung.

Die bekannten Systeme erfordern angesichts der optischen Komponenten und komplexeren Elektronik regelmäßig mehr Bauraum als die kapazitiven Systeme.

Aufgabe der Erfindung ist es, ein verbessertes, kompaktes optisches Sensorsystem für die Bedienkontrolle bei Zugangssystemen für Fahrzeuge bereitzustellen.

Diese Aufgabe wird durch eine Einrichtung mit den Merkmalen des Anspruchs 1 gelöst.

Die erfindungsgemäße Sensoreinrichtung ist für ein Kraftfahrzeug bestimmt, wobei die Sensoreinrichtung Annäherungen und Bewegungen eines Nutzers insbesondere im Außenbereich des Fahrzeugs überwachen und auswerten kann. Die Sensoreinrichtung ist insbesondere für die Schaltung von Zugangselementen, also Türschlössern oder Heckschlössern vorgesehen und entsprechend im Seitenbereich des Fahrzeugs, beispielsweise in der A- oder B-Säule oder im Heckbereich des Fahrzeugs, dort z.B. im Stoßfänger oder im Bereich der Kennzeichenbeleuchtung anzuordnen.

Die Erfindung betrifft dabei eine Sensoranordnung, welche das Time-of-Flight-(ToF)Verfahren realisiert, so dass dieses hier kurz erläutert wird.

Beim ToF-Verfahren wird ein Raumbereich mit einer Lichtquelle beleuchtet und die Laufzeit des von einem Objekt im Raumbereich zurück reflektierten Lichtes mit einem Zeilen- oder Flächensensor aufgenommen. Dazu sollten Lichtquelle und Sensor möglichst nah zueinander angeordnet sein, so dass ein Winkel zwischen Beleuchtungsstrahl und Detektionsweg näherungsweise vernachlässigt werden kann. Von der Lichtquelle gehen Lichtpulse, z.B. Laserpulse geringer Dauer (z.B. 30ns bis 300ns) aus, treffen auf Objekte in der Umgebung, werden reflektiert und gelangen durch eine Optik auf den Sensor. Der Sensor ist ebenfalls gepulst zu betreiben, z.B. durch einen elektronischen Verschluss (Shutter). Aus dem linearen Zusammenhang von Lichtlaufzeit und Lichtgeschwindigkeit lässt sich die Distanz zwischen Sensor und Messobjekt bestimmen.

Zur Messung der zeitlichen Verzögerung muss eine Synchronisation zwischen Lichtquelle und Sensor gegeben sein. Je nach zu detektierendem Entfernungsbereich kann die realive zeitliche Lage der aktiven Pulsphasen von Lichtquelle und Photodetektorarray variiert werden.

Einerseits wird bei diesem Konzept also die Lichtquelle gepulst betrieben. Außerdem wird auch die Detektionseinheit, also das sensitive Pixelarray, gepulst sensitiv geschaltet, also das Integrationsfenster der einzelnen Pixel wird zeitlich mit der Lichtquelle synchronisiert und in der Integrationsdauer begrenzt. In dem Photodetektorarray werden durch die eintreffenden Photonen freie Ladungsträger generiert, gesammelt und auf diese Weise das Spannungssignal entsprechend proportional zum Integral über die eintreffende Bestrahlungsstärke während der Verschlussöffnungszeit erzeugt.

Es ist möglich, mehrere Messungen bei verschiedenen Verschlusszeiten zu machen, insbesondere um verschiedenen Reflexionseigenschaften von erfassten Objekten Rechnung zu tragen. Außerdem kann zur Hintergrundlichtunterdrückung eine Differenzbildung zwischen Messungen mit Lichtpuls und ohne Lichtpuls erfolgen.

Für das Messprinzip ist es unerheblich, ob der Kameraverschluss vor dem Bildsensor angebracht ist oder hinter dem Photodetektor zum Beispiel in Form eines Schalters, der den Sammelprozess der photogenerierten Ladungsträger unterbricht. Die Grundidee des Messverfahrens ist, dass nur reflektiertes Licht innerhalb der kurzen Verschlussöffnungszeit registriert wird.

Zu den weiteren technischen Konzepten der optischen Erfassung und räumlichen Zuordnung der Informationen wird auf diesbezügliche Ausarbeitungen verwiesen, welche diese detailliert beschreiben, insbesondere die Dissertation "Photodetektoren und Auslesekonzepte für 3D-Time-of-Flight-Bildsensoren in 0,35 µm-Standard-CMOS-Technologie", Andreas Spickermann, Fakultät für Ingenieurwissenschaften der, Universität Duisburg-Essen, 2010.

Außerdem wird auf die Publikation "Optimized Distance Measurement with 3D-CMOS Image Sensor and Real-Time Processing of the 3D Data for Applications in Automotive and Safety Engineering", Bernhard König, Fakultät für Ingenieurwissenschaften der Universität Duisburg-Essen, 2008 verwiesen.

Wesentlich ist, dass diese Erfassungsmethode keine reine bildbasierte Erfassungsmethode ist. Es wir bei jedem Pixel eine Abstandsinformation ermittelt, welche durch die zeitliche Lichtdetektion erfolgt. Bei Verwendung eines Pixelarrays liegt schließlich eine Matrix von Abstandswerten vor, welche bei zyklischer Erfassung eine Interpretation und Verfolgung von Objektbewegungen zulässt.

Die erfindungsgemäße Sensoreinrichtung weist als Bestandteile unter anderem eine Lichtquelle und eine Erfassungseinrichtung (Detektion) auf. Die Erfassungseinrichtung hat einen Array von optischen Pixeln, also fotosensitiven Elementen. Insbesondere kann es sich bei der Einrichtung um ein CCD-Element oder ähnliches handeln. Das Array bildet zusammen mit der Lichtquelle die Raumdaten-Überwachungseinrichtung der oben genannten Art eines "Time-of-Flight"-Systems oder auch eines "3D-Imager" oder "Range Imager" bezeichnet. Es wird dabei ein Pixelarray mit einer zeitlichen Ansteuerung verwendet, welches Abstandserfassungen erlaubt und eine Objektbewegung erfassen kann, indem die Abstandsinformation in einer zeitlichen Folge analysiert werden. In Autos werden bereits ähnliche 3D-Sensoren in Spurhaltesystemen, zum Fußgängerschutz oder als Einparkhilfe eingesetzt.

Die Lichtquelle ist nahe dem Array von sensitiven Pixeln angeordnet, beispielsweise in geringem Abstand in Nachbarschaft zu dem Array. Eine Steuerschaltung steuert sowohl den Betrieb der Lichtquelle als auch den Betrieb des Pixelarrays.

Zur Ansteuerung und Synchronisierung der Lichtquelle und der Erfassungseinrichtung sind beide Elemente mit der erwähnten Steuer- und Auswerteeinrichtung gekoppelt. Diese übernimmt die zeitliche abgestimmte Bestrahlung des überwachten Raums und die zugehörige Schaltung der Erfassungseinrichtung in einen Erfassungs-Modus. Die Lichtquelle wird entsprechend zur Abgabe von Lichtpulsen angesteuert und sendet dazu Licht vorzugsweise im langwelligen, nicht-sichtbaren Spektrum aus, insbesondere dem Infrarotspektrum. Dazu ist eine Laserdiode oder eine äußerst lichtstarke LED vorgesehen.

Die Lichtquelle ist mit einer Optik ausgestattet, welche das ausgesandte Licht gemäß der Anwendung in den Detektionsraum verteilt. Dazu kann ein Optikpaket, z.B. Linsenpaket vor die Lichtquelle gesetzt sein, welches eine Aufweitung des ausgesendeten Lichtstrahls oder eine Umlenkung oder Fokussierung vornimmt.

Zur Montage an Fahrzeugen ist die Sensoreinrichtung mitsamt der Lichtquelle und der Erfassungseinrichtung zu einer Einheit integriert, welche in einfacher Weise am Fahrzeug montierbar ist. Dazu sind Lichtquelle und Erfassungseinrichtung in einer Aufnahme angeordnet, die zur Befestigung der Sensoreinrichtung an einem Fahrzeug vorgesehen und ausgebildet ist. Die Aufnahme kann ein umschließendes Gehäuse oder eine Schale sein, wobei für Erfassungseinrichtung und Lichtquelle jeweils zumindest Sichtfenster zum Erfassungsbereich hin optisch transparent im maßgeblichen Wellenlängenbereich ausgebildet sind. Die Aufnahme schützt und hält die Lichtquelle und die Erfassungseinrichtung und richtet sie in der erfindungsgemäßen Weise aus.

Die Aufnahme ist so zur Befestigung an einem Fahrzeug ausgebildet, dass die Aufnahme bei Montage entlang einer Anlagefläche des Fahrzeuges anzuordnen ist. Die Anlagefläche wird beispielsweise durch die Bodenkontur eines Aufnahmeraumes, z.B. einer Aussparung am Fahrzeug gebildet. Die Lichtquelle ist erfindungsgemäß innerhalb der Aufnahme gekippt angeordnet, so dass zwischen einer Normalen zu der Anlagefläche und der optischen Achse der Lichtquelle ein Winkel von mindestens 5° gebildet ist.

Die Lichtquelle ist also innerhalb der Aufnahme verkippt oder schräg angeordnet, so dass die optische Achse der Lichtquelle und der zugehörigen Optik geneigt ist gegen die Aufnahme und die Fahrzeugkontur im Bereich der Montage. Der Begriff der Kippung oder Neigung bezeichnet dabei die abweichende Ausrichtung der Lichtquelle mit ihrer optischen Achse von primären Montageebene innerhalb der Aufnahme. Dazu wird innerhalb der Aufnahme für elektronische Komponenten, z.B. Platinen, eine erste, primäre Montageebene bereitgestellt, gegen welche die Lichtquelle mit der erwähnten Neigung montiert wird. Wird ein derartiger Sensor beispielsweise in der B-Säule des Fahrzeugs angeordnet, so weist diese B-Säule eines Fahrzeuges oft eine Neigung gegen die Senkrechte auf, da sich der Fahrzeugquerschnitt nach oben verjüngt. Um eine optimierte Erfassung des Umfelds vom Fahrzeug zu ermöglichen, ohne den Bauraum zu vergrößern, erfolgt eine Verkippung oder Schrägstellung der Beleuchtungseinrichtung selbst, innerhalb der Aufnahme und auch gegenüber der Außenhaut des Fahrzeugs. Dadurch wird die Schräglage der Anordnung am Fahrzeug kompensiert oder überkompensiert, um die Einrichtung in schmaler Bauweise am Fahrzeug anzuordnen. Wesentlich ist, dass die optische Achse der Anordnung aus Lichtquelle und Linsenpaket schräg zu der Aufnahme orientiert sein kann.

Während die Lichtquelle erfindungsgemäß mit ihrer optischen Achse gekippt in der Aufnahme angeordnet ist, braucht dies für die optische Achse der Erfassungseinrichtung nicht zu gelten. Allerdings ist es im Rahmen der Erfindung durchaus in vorteilhafter Weise möglich, auch die optische Achse der Erfassungseinrichtung verkippt im Gehäuse aufzunehmen, nämlich mit gleichsinniger Verkippung wie bei der Lichtquelle und gleicher oder ähnlicher Neigung. Erfindungsgemäß kann also eine ausschließliche Kippung der Beleuchtungsoptik stattfinden oder eine Kippung sowohl der Beleuchtungsoptik als auch der Detektionsoptik. Der Begriff der Verkippung versteht sich dabei so, dass eine Kippung bezüglich der Befestigungsfläche, z.B. Befestigungsebene am Fahrzeug vorgesehen ist, also die jeweiligen optischen Achsen einen Winkel von mindestens 5° zur Montagefläche am Fahrzeug einnehmen. Je nach Montageposition am Fahrzeug kommen Winkelbereiche zwischen 5° und 45° in Betrag, regelmäßig Neigungen zwischen 15° und 30°. Bei der Erfindung ist die Sensoranordnung auf einer teilflexiblen Leiterplatte, insbesondere einer Semiflex-Leiterplatte angeordnet. Als Semiflex-Leiterplatten werden Leiterplatten bezeichnet, die abschnittsweise und innerhalb vorgegebener Biegeradien als flexibel ausgebildet sind, wobei der Querschnitt der Leiterplatte im Biegebereich wesentlich verringert ist. In dieser Weiterbildung der Erfindung wird die Sensoreinrichtung integral auf einer Leiterplattenanordnung vorgenommen, wobei unterschiedliche Abschnitte der Leiterplatte durch semiflexible Bereiche verbunden sind. Die Kippung der Optik ist ausgebildet, indem diese auf einem Teil der Leiterplatte angeordnet ist, der gegenüber einem anderen Teil der Leiterplatte um den Neigungswinkel gekippt ist. Beispielsweise kann also die Steuer- und Auswerteschaltung auf einem ersten Abschnitt der Platine angeordnet sein, wobei sich entlang der Platine versetzt zu diesem Bereich ein Biegebereich der Leiterplatine erstreckt und sich daran ein Bereich anschließt, auf dem die Lichtquelle mit einem Optikpaket angeordnet ist. Der Biegebereich zwischen diesen Leiterplattenbereichen ist so verformt, dass die Lichtquelle gegenüber dem ersten Leiterplattenabschnitt geneigt ist. Daran anschließen kann sich wiederum ein zweiter Leiterplattenabschnitt der wiederum in die Gegenrichtung gebogen ist und daher in Richtung des ersten, nicht geneigten Leiterplattenabschnitts. Wesentlich ist also, dass die Neigung oder Kippung der Optik trotz Montage auf einer einheitlichen Leiterplatte mit flexiblen Bereichen ausgebildet wird und die Neigung der Optik durch eine Verformung der Leiterplatte in den flexiblen Bereichen erreicht wird. In gleicher Weise kann durch eine Verformung der Leiterplatte auch eine Neigung der Detektionsachse der Erfassungseinrichtung erfolgen.

Gemäß einem weiteren Aspekt der Erfindung werden dem Beleuchtungselement optische Elemente in Gestalt diffraktiver optischer Elemente (DOE) zugeordnet. Ziel der erfindungsgemäßen Sensoreinrichtung ist es, gezielt begrenzte Raumbereiche einer optischen Kontrolle zu unterziehen. Diffraktive optische Elemente sind Elemente zur Formung eines Lichtstrahls, beispielsweise zur Strahlteilung, Strahlaufweitung oder auch Fokussierung. Sie bedienen sich im Gegensatz zu Linsenelementen dem physikalischen Prinzip von optischen Gittern. Durch Einsatz dieser äußerst klein bauenden diffraktiven optischen Elemente kann der Strahl der Beleuchtungseinrichtung auf solche Raumbereiche verteilt und begrenzt werden, die für die Erfassung relevant sind.

Da die Leistung einer Beleuchtungseinrichtung in der Sensoreinrichtung begrenzt ist, soll die Strahlungsenergie möglichst zielgerichtet auf die relevanten Bestrahlungsbereiche verteilt werden. Zu diesem Zweck ist gemäß einem weiteren Aspekt der Erfindung vorgesehen, der Strahlungsquelle ein diffraktives optisches Element zuzuordnen, welches eine Strahlteilung vornimmt. Die Strahlteilung erfolgt derart, dass aus derselben Lichtquelle und derselben Sensoreinrichtung geteilte Lichtkegel in verschiedene Raumbereiche ausgesandt werden. Beispielsweise kann bei Montage der Sensoreinrichtung in der B-Säule eines Fahrzeugs ein Beleuchtungskegel entlang der Außenhaut des Fahrzeugs in Richtung des Türgriffs der Fahrertür abgeteilt und gerichtet werden, während ein anderer Lichtkegel mit leichter Neigung nach unten vom Fahrzeug wegführt, um eine Annäherung eines Benutzers zu detektieren. Durch diese Teilung der Beleuchtungsintensität kann einerseits eine erhöhte Energiedichte in den beleuchteten Bereichen erreicht werden, gegenüber einer breiten Abstrahlung in einen größeren Bereich und andererseits eine Selektion der sensitiven Bereiche erzielt. Die unbeleuchteten Bereiche werden nämlich von der Empfangsoptik bzw. der Erfassungseinrichtung nicht detektiert und entsprechend ausgeblendet. Wesentlich ist, dass eine Strahlteilung durch die Elemente erreicht wird, so dass eine einheitliche Lichtquelle entlang eines Raumwinkels diskontinuierlich Winkelbereiche ausleuchtet.

Die diffraktiven optischen Elemente können neben der Strahlteilung auch zur Aufweitung des Strahls eingesetzt werden.

Gemäß einem weiteren Aspekt der Erfindung ist wenigstens eine der Linsen des Optikpakets der Beleuchtungseinrichtung als Flüssiglinse ausgebildet. Derartige Flüssiglinsen sind insbesondere sehr klein realisierbar. Flüssiglinsen sind z.B. mittels elektrischer Spannung einstellbar, so dass der Bestrahlungswinkel der Beleuchtungseinrichtung in Abhängigkeit von der Nutzungssituation oder der Umgebungsbedingungen einstellbar ist. Die Steuer- und Auswerteschaltung kann eine Spannung an die Flüssiglinse anlegen, um deren Brennweite zu verändern und unterschiedliche Erfassungsszenarien auszuleuchten. Es kann z.B. eine intensive, fokussierte Beleuchtung eines Raumwinkels erfolgen oder eine breite Ausleuchtung mit geringerer Energiedichte. Flüssiglinsen können hierbei sowohl in der Beleuchtungsoptik als auch in der Empfangsoptik eingesetzt werden.

Die Erfindung wird nun anhand der beiliegenden Zeichnungen näher beschrieben.
Figur 1 zeigt in schematischer Weise die Einsatzsituation einer patentgemäßen Erfassungsvorrichtung an einem Fahrzeug;
Figur 2 zeigt die wirkenden Komponenten einer erfindungsgemäßen Sensoranordnung in schematischer Darstellung;
Figur 3 zeigt den schematischen Aufbau mit gekippter Beleuchtungseinrichtung gemäß einem weiteren Ausführungsbeispiel der Erfindung in einer schematischen Schnittansicht;
Figuren 4a, 4b zeigen die Strahlteilung der Beleuchtungseinrichtung gemäß einem weiteren Ausführungsbeispiel der Erfindung;

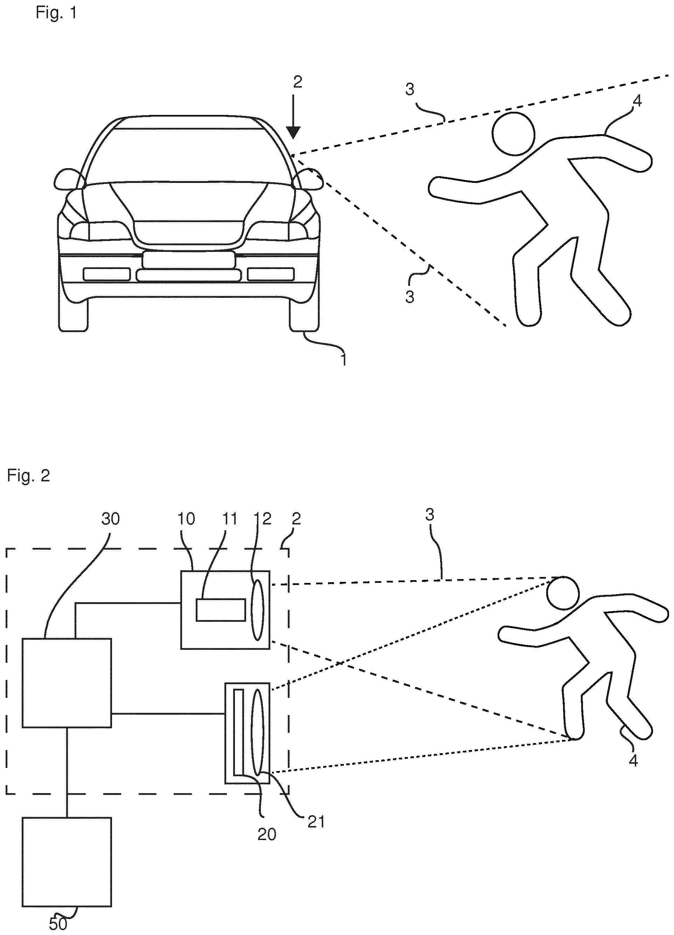

Wie in Figur 1 dargestellt, ist ein Fahrzeug 1 mit einer erfindungsgemäßen Sensoreinrichtung 2 ausgestattet. Die Sensoreinrichtung 2 erfasst Vorgänge und Bewegungen in einem Erfassungsbereich 3, hier durch gebrochene Linien angedeutet. Ein Benutzer 4, welcher sich dem Fahrzeug nähert, hat die Möglichkeit, in den Erfassungsbereich 3 Bewegungsgesten auszuführen, um Fahrzeugfunktionen abzurufen. In der hier gezeigten Ausführungsform ist die Erfassungsvorrichtung 2 seitlich am Fahrzeug in der B-Säule untergebracht. Eine derartige Erfassungsvorrichtung kann jedoch auch an beliebiger anderer Stelle des Fahrzeuges, insbesondere im Heckbereich oder im Frontbereich angeordnet sein. In Figur 1 wird weiterhin gezeigt, dass der Erfassungsbereich 3 mit seiner optischen Achse geneigt zu der Montageebene am Fahrzeug ausgerichtet ist. Während die B-Säule sich nach oben zum Fahrzeugzentrum neigt, ist der Erfassungsbereich gegenüber der Horizontalen leicht nach unten geneigt. Dies wird durch die Kippung der Optik erreicht, wie unten gezeigt.

Figur 2 zeigt die Komponenten der Erfassungsvorrichtung in schematischer Darstellung. In dieser Darstellung ist das Fahrzeug 1 nicht gezeigt, um die Darstellung nicht unklar zu gestalten.

Die Einrichtung ist in einer Aufnahme 2 angeordnet und weist eine Lichtquelle 10 auf, welche in diesem Beispiel aus einer Laserdiode 11 und einer aufweitenden Optik 12 gebildet ist. Die Optik 12 erweitert den Strahlquerschnitt, so dass ein breiter Erfassungsbereich 3 gebildet ist, in welchen ein Benutzer 4 eintreten und in welchen er Bewegungsgesten ausführen kann. Es kann sich hierbei z.B. um eine einfache Kunststoffoptik oder auch eine Glasoptik handeln, z.B. eine Sammellinse, Asphäre oder auch Fresnel-Linse. Alternativ können diffraktive optische Elemente die Optik oder einen Teil davon bilden.

Ein Detektionsarray 20 ist benachbart zu der Lichtquelle angeordnet, ausgerichtet mit dem sensitiven Bereich in Richtung des Erfassungsbereiches 3. Das Array 20 enthält Spalten und Zeilen von sensitiven Pixeln, und ist in diesem Beispiel als CCD-Array ausgebildet. Der Erfassungseinrichtung 20 ist eine Optik 21 vorgeschaltet, welche den Erfassungsbereich 3 auf das CCD-Array abbildet. Diese Optik kann auch einen ansteuerbaren Verschluss aufweisen oder geeignete Filter, insbesondere Infrarot(IR)-Filter oder auch Polarisationsfilter, welche das Hintergrundlicht gegenüber dem Laserlicht unterdrücken. Auch diese Optik kann Flüssigkeitslinsen aufweisen, die eine Ansteuerung und Fokussierung erlauben oder auch ein Mikrolinsenarray.

Sowohl die Lichtquelle 10 als auch das Array 20 sind mit einer Steuereinrichtung 30 gekoppelt, welche ein getakteten und zeitgesteuerten Betrieb der Lichtquelle 10 und Erfassungseinrichtung 20 ermöglichen. Wird die Lichtquelle 10 zur Aussendung eines Lichtpulses angesteuert und die Pixelarray-Anordnung zur Erfassung angesteuert, so integrieren die einzelnen Pixel die auftreffende Lichtenergie für eine vorgegebene Zeitdauer. Jede nach Integration jeweils vorhandenen Ladung jedes Pixels wird in der Steuereinrichtung ausgewertet, so dass für jeden Pixel ein für den Integrationszeitraum charakteristischer Erfassungswert generiert wird.

Über diese zeitabgestimmte und synchronisierte Ansteuerung sowohl der Lichtquelle 10 als auch der Erfassungseinrichtung 20 ist für jedes Pixel der Erfassungseinrichtung 20 eine Erfassung der Lichtlaufzeit und damit eine Abstandsdetektion möglich. Zu genauen Funktionen wird auf die Offenbarung der oben genannten Veröffentlichungen verwiesen, insbesondere auf die bekannten Time-of-Flight-Einrichtungen.

In der Praxis wird die Lichtinformation nicht allein von einem Benutzer ausgehen, von dem das ausgestrahlte Licht der Lichtquelle 10 zurückgestrahlt wird, stattdessen wird eine Integration über das gesamte empfangene Licht von allen sichtbaren Punkten erfolgen. Auch die Umgebung wird zu der Detektionsleistung beitragen. Es sind jedoch Algorithmen und Betriebsweisen der Sensoranordnung bekannt, bei denen das Umgebungslicht weitgehend herausgerechnet werden kann. Insbesondere können mehrere Aufnahmen kurz nacheinander und mit veränderten zeitlichen Parametern erfolgen, um Hintergrundlicht herauszurechnen. Eine solche Erfassung kann insbesondere mit unterschiedlichen Integrationszeiten erfolgen, um Hintergrundeinflüsse zu beseitigen. Wird nämlich beispielsweise der Lichtpuls mit identischer Dauer ausgesendet, jedoch die Integration in ihrer Dauer variiert, so haben die Hintergrundeinflüsse einen linearen Zusammenhang zur Integrationszeit, während die Einflüsse durch den Lichtpuls nur für die Dauer des Lichtpulses bestehen.

Die Steuer- und Auswerteeinrichtung 30 erfasst die Informationen und rechnet diese in einem Array von Abstandsinformationen um. Dadurch kann eine 3D-Karte der Umgebung erstellt werden. Durch eine zeitliche Abfolge von Handsteuerungen kann eine 3D-Information von Raumveränderungen und Objektbewegungen im Erfassungsbereich 3 erfasst werden. Beispielsweise kann das Schwenken einer Hand des Benutzers 4 detektiert werden. Die Steuereinrichtung 30 und über sie die gesamte Erfassungseinrichtung 2 ist mit einer zentralen Steuereinrichtung 50 des Kraftfahrzeuges gekoppelt. Die Erkennung von Bewegungsgesten kann einerseits anhand einer Bibliothek in der Steuer- und Auswerteeinrichtung 30 erfolgen oder eine Zeitfolge von 3D-Raumdaten wird der zentralen Steuereinrichtung 50 zugeleitet, um dort ausgewertet zu werden. Die Einrichtung 30 kann außerdem eine Mustererkennung, z.B. in Gestalt eines neuronalen Netzes aufweisen, um Bedienungsgesten anhand charakteristischer Raumdaten zu erkennen. Die zentrale Steuereinrichtung 50 initiiert schließlich in Abhängigkeit von den erfassten Daten die Funktionsauslösung des Kraftfahrzeuges, beispielsweise das Absenken einer Seitenscheibe oder die Öffnung einer Tür oder Heckklappe.

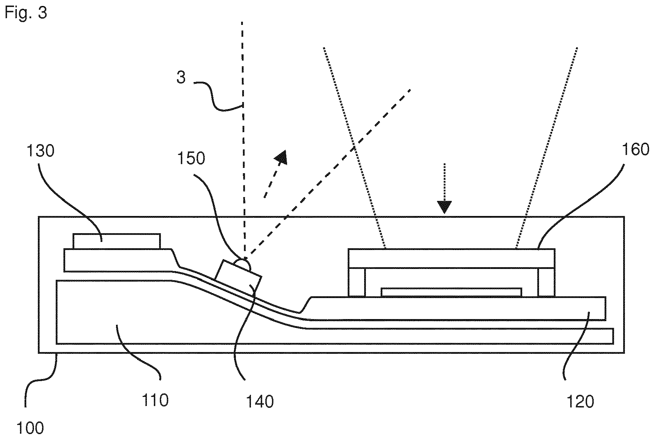

Nachdem die Sensoranordnung in ihrem schematischen Aufbau und der Lage am Fahrzeug erläutert wurde, zeigt Figur 3 ein erstes Ausführungsbeispiel des Sensoraufbaus in einer seitlichen Schnittansicht der integrierten Sensoreinrichtung. Ein Gehäuse 100 bildet eine Aufnahme für die Sensorkomponenten. In dem Gehäuse 100 ist eine Trägerstruktur 110 ausgebildet, welche die Unterlage für die aufzulegende Schaltungsanordnung bildet. Die Schaltungsanordnung ist auf einer teilweise flexiblen Platine 120 angeordnet. Diese weist dünne, flexible Bereiche auf und dickere, starre Bereiche. In einem ersten Abschnitt der Platine 120 ist die Steuer- und Auswerteeinrichtung 130 aufgebracht. Diese kann einen Mikrocontroller, Speicherbausteine und weitere elektronische Schaltelemente enthalten. An den Bereich, welcher die Steuer- und Auswerteeinrichtung 130 trägt schließt sich ein verjüngter, flexibler Bereich der Platinen 120 an, gefolgt von einem Platinenabschnitt 140, der die Beleuchtungseinrichtung 150 trägt. Weiter entlang der Platine 120 fortschreitend, folgt wieder ein verjüngter, flexibler Bereich der Platine und ein versteifter, dickerer Bereich der Platine 120, auf dem die optische Erfassungseinrichtung 160 ausgebildet ist. Die optische Erfassungseinrichtung 160 weist in diesem Beispiel ein CMOS-Array und eine zugehörige Optik auf. Die Trägerstruktur 110 ist so auf die Platine und ihre flexiblen Bereiche angepasst, dass die Platinenabschnitte mit unterschiedlicher Neigung unterstützt werden. Es ist ersichtlich, dass der mittlere starre Platinenabschnitt derart auf einer Rampe der Trägerstruktur 110 aufgebracht ist, dass die Beleuchtungseinrichtung 150 geneigt zu den übrigen Komponenten, insbesondere den anderen Abschnitten der Platine ist.

Auf diese Weise wird ein kompakt bauender optischer Sensor bereitgestellt, der mit seiner rückseitigen Flachseite (Unterseite in Figur 3) beispielsweise an der B-Säule des Fahrzeugs montiert werden kann, gleichwohl jedoch eine Abstrahlung in einen zu der Montagefläche geneigten Bereich vornehmen kann. Da die Platine zunächst im ebener Lage, also mit ebener Ausrichtung der Platinenabschnitte bestückt wird und erst später in die Aufnahme und die Trägerstruktur eingebracht wird, ist die Montage der Optik 150 auf der Platine 140 in einfacher Weise realisierbar, die sie der üblichen Montage einer Optik auf ebener Platine entspricht. Erst durch die Aufnahme und die Trägerstruktur in der Aufnahme erhält die Platine mit ihren verjüngten Bereichen die Neigung der optischen Lichtquelle.

Es ist auch ersichtlich, dass auch die Detektionseinrichtung 160 durch eine entsprechende Ausgestaltung der Trägerstruktur 110 erfindungsgemäß geneigt werden könnte. Außerdem ist ersichtlich, dass zur erfindungsgemäßen Neigung der Lichtquelle 150 nicht unbedingt eine Semiflex-Platine erforderlich ist, stattdessen können auch mehrere Platinen durch Leitverbindungen gekoppelt werden.

Durch die Abstimmung einer Trägerstruktur mit einer Neigung und die anschließende Aufbringung der verschiedenen Komponenten an den vorgesehenen Stellen der Trägerstruktur in der Aufnahme wird eine Sensoranordnung mit einer vorteilhaften Ausrichtung der optischen Komponenten geschaffen. Es ist möglich, für unterschiedliche Fahrzeugmodelle, die unterschiedliche Montageebenen und Neigungswinkel erfordern, unterschiedliche Trägerstrukturen 110 in eine Aufnahme 100 anzubringen oder an unterschiedliche Aufnahmen 100 mit zugehörigen Trägerstrukturen auszubilden. Dann kann dieselbe Platinenanordnung mit Lichtquelle, Steuer- und Auswerteschaltung und optischer Erfassungseinrichtung für unterschiedliche Fahrzeugmodelle eingesetzt werden.

Dank des Konzepts der Bestückung in einer Ebene, wie in diesem Aufbau gezeigt und der Anordnung auf entsprechenden Aufnahmestrukturen zur Kippung oder Neigung der Optik ist es möglich, handelsübliche Montagesätze für Optiken und LEDs oder Laserdioden zu verwenden.

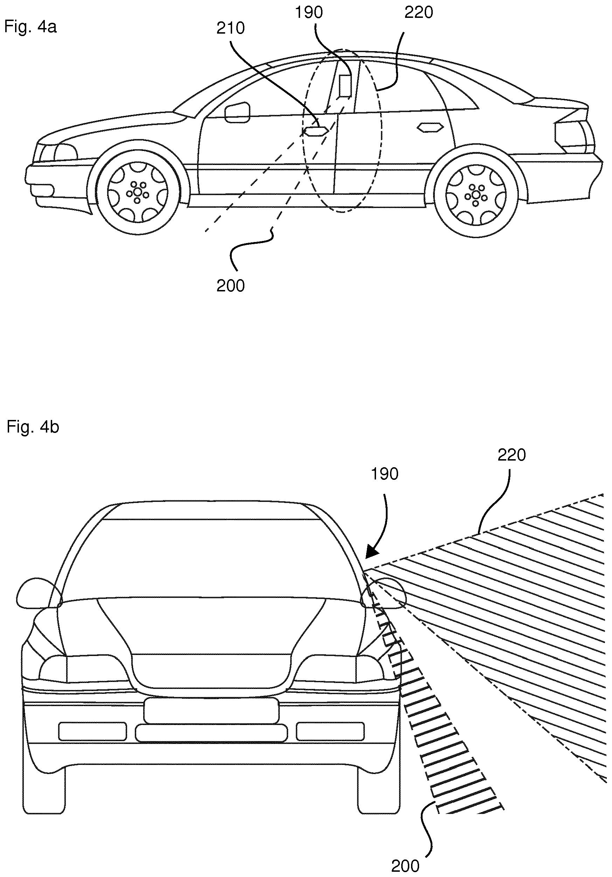

Die Figuren 4a und 4b zeigen ein weiteres Konzept gemäß einem anderen Ausführungsbeispiel der Erfindung. Gemäß diesem Ausführungsbeispiel ist die Sensoreinrichtung 190 in der B-Säule des Fahrzeuges aufgenommen und wird als Teil des Optikpakets der Beleuchtungseinrichtung eine Strahlteilereinrichtung verwendet. Dazu werden klein bauende, diffraktive optische Elemente eingesetzt, um die Strahlungsenergie der Lichtquelle selbst, beispielsweise der Laserdiode, in unterschiedliche Raumbereiche zu lenken. Figur 4a zeigt, dass ein Teil der Strahlungsenergie in einem Strahlungskegel 200 nach unten und zur Fahrzeugfront hin abgeteilt und aufgeweitet wird, so dass der Türgriff 210 der Fahrertür im Beleuchtungsbereich liegt. Ein anderer Anteil 220 der Strahlungsenergie wird in einen nach unten geneigten Kegel, seitlich vom Fahrzeug weggelenkt, um Benutzer zu beleuchten, die sich von dort an das Fahrzeug annähern. Auf diese Weise können irrelevante oder störende Detektionssignale verhindert werden, da nur Teilbereiche, die für die Erfassung relevant sind beleuchtet werden. Nähert beispielsweise ein Benutzer seine Hand an den Türgriff an, bewegt er diese in den abgeteilten Strahlkegel der auf den Türgriff gerichtet ist und sorgt damit für eine signifikante Signalerhöhung bei dem zurückgeworfenen Licht auf die Erfassungseinrichtung.

Die Strahlteilung kann in mehrere Strahlbestandteile erfolgen, die in unterschiedliche Richtungen abgelenkt werden. Wesentlich ist, dass eine einzige Lichtquelle in diesem Fall ausreicht, um unterschiedliche und getrennte Bereiche zu bestrahlen und auch nur mit einer einheitlichen Erfassungseinrichtung das zurückgeworfene Licht detektiert wird.

## Patentansprüche

1. Sensoreinrichtung (2) für ein Kraftfahrzeug (1), mit wenigstens einer Lichtquelle (10; 150) und einer Erfassungseinrichtung (20; 160), wobei die Erfassungseinrichtung mit einem Array von optischen Pixeln ausgebildet ist,
wobei die Lichtquelle (10; 150) und die Erfassungseinrichtung (20; 160) mit einer Steuer- und Auswerteeinrichtung (30; 130) gekoppelt sind, welche die Lichtquelle (10; 150) zur Abgabe von Lichtpulsen ansteuert und die Erfassungseinrichtung (20; 160) zur Erfassung des von der Umgebung zurückgestrahlten Lichtes ansteuert sowie die erfassten Signale der Erfassungseinrichtung (20; 160) auswertet,
wobei die Steuer- und Auswerteeinrichtung (30; 130), die Erfassungseinrichtung (20; 160) und die Lichtquelle (10; 150) zusammen als Time-of-Flight-Aufbau (ToF-Aufbau) zur Erfassung in einer ersten Raumrichtung ausgebildet sind, so dass räumlich zuordenbare Entfernungsdaten erfasst werden, wobei die Lichtquelle (10; 150) und die Erfassungseinrichtung (20; 160) in einer Aufnahme angeordnet sind, die zur Montage der Sensoreinrichtung an einem Fahrzeug ausgebildet ist, wobei die Aufnahme entlang einer Anlagefläche des Fahrzeuges anzuordnen ist,
wobei die Lichtquelle innerhalb der Aufnahme gekippt angeordnet ist, so dass zwischen einer Normalen zu der Anlagefläche und der optischen Achse der Lichtquelle ein Winkel von mindestens 5° gebildet ist, **dadurch gekennzeichnet, dass** die Lichtquelle und die Erfassungseinrichtung auf einer teilflexiblen Leiterplatte aufgebracht sind, wobei der die Lichtquelle tragende Abschnitt der Leiterplatte gegenüber einem anderen Abschnitt der Leiterplatte in dem Neigungswinkel fixiert ist.

2. Sensoreinrichtung nach Anspruch 1, wobei in der Aufnahme ein Trägerprofil angeordnet ist, welches wenigstens einen schräg verlaufenden Stützabschnitt für die Lichtquelle aufweist und diese in der Neigungslage hält.

3. Sensoreinrichtung nach Anspruch 1, wobei die Erfassungseinrichtung ebenfalls auf dem geneigten und die Lichtquelle tragenden Abschnitt der Leiterplatte fixiert ist.

4. Sensoreinrichtung nach einem der vorangehenden Ansprüche, wobei die Lichtquelle optische Komponenten zur Strahlformung aufweist, wobei wenigstens eine der Komponenten aus einem diffraktiven optischen Element gebildet ist.

5. Sensoreinrichtung nach einem der vorangehenden Ansprüche, wobei die Lichtquelle eine Strahlteilereinrichtung aufweist welche das ausgesendete Licht in diskontinuierliche Raumwinkelbereiche teilt.

6. Sensoreinrichtung nach einem der vorangehenden Ansprüche, wobei die Lichtquelle als optische Komponente wenigstens eine Flüssiglinse aufweist.

7. Sensoreinrichtung nach Anspruch 6, wobei die Flüssiglinse mit der Steuer- und Auswerteeinrichtung gekoppelt ist, um eine ansteuerungsabhängige Strahlformung der Lichtquelle vorzunehmen.

8. Sensoreinrichtung nach einem der vorangehenden Ansprüche, wobei der Erfassungseinrichtung wenigstens ein optisches Filter vorgeschaltet ist, insbesondere ein Infrarotfilter oder ein Polarisationsfilter.

9. Sensoreinrichtung nach einem der vorangehenden Ansprüche, wobei der Neigungswinkel zwischen 5° und 30°, vorzugsweise zwischen 5° und 20° beträgt.

## Claims

1. Sensor device (2) for a motor vehicle (1), having at least one light source (10; 150) and an optical detection device (20; 160), wherein the detection device is formed having an array of optical pixels,
wherein the light source (10; 150) and the detection device (20; 160) are coupled to a control and evaluation device (30; 130), which activates the light source (10; 150) to emit light pulses and activates the detection device (20; 160) to detect light reflected back by the environment, and evaluates the detected signals from the detection device (20; 160),
wherein the control and evaluation device (30; 130), the detection device (20; 160) and the light source (10; 150) together are configured as a Time-of-Flight assembly (ToF assembly) for detection in a first spatial direction, such that spatially assignable distance data are detected,
wherein the light source (10; 150) and the detection device (20; 160) are arranged on a receptacle, which is formed on a vehicle for mounting the sensor device, wherein the receptacle is to be arranged along a contact surface of the vehicle,
wherein the light source (10; 150) is arranged in a tilted manner inside the receptacle, such that an angle of at least 5° is formed between a normal to the contact surface and the optical axis of the light source,
**characterized in that**
the light source and the detection device are mounted on a partially flexible circuit board, wherein the portion of the circuit board supporting the light source is fixed in its angle of inclination relative to another portion of the circuit board.

2. Sensor device according to Claim 1, wherein a carrier profile is arranged in the receptacle, said profile having at least one supporting section extending at an angle for the light source, which the profile holds in the inclined position.

3. Sensor device according to Claim 1, wherein the detection device is also fixed on the inclined portion of the circuit board which supports the light source.

4. Sensor device according to any one of the previous claims, wherein the light source has optical beamforming components, at least one of the components being formed from a diffractive optical element.

5. Sensor device according to any one of the previous claims, wherein the light source has a beam-splitter device, which splits the emitted light into discontinuous solid angle regions.

6. Sensor device according to any one of the previous claims, wherein the light source has at least one fluid lens as an optical component.

7. Sensor device according to Claim 6, wherein the fluid lens is coupled to the control and evaluation device, to form the beam of the light source in an activation-dependent manner.

8. Sensor device according to any one of the previous claims, wherein at least one optical filter, in particular an infrared filter or a polarisation filter, is placed upstream of the detection device.

9. Sensor device according to any one of the previous claims, wherein the angle of inclination is between 5° and 30°, preferably between 5° and 20°.

## Revendications

1. Dispositif capteur (2) pour un véhicule automobile (1), avec au moins une source de lumière (10 ; 150) et un dispositif de détection (20 ; 160), dans lequel le dispositif de détection est réalisé avec un réseau de pixels optiques,
dans lequel la source de lumière (10 ; 150) et le dispositif de détection (20 ; 160) sont couplés avec un dispositif de commande et d'évaluation (30 ; 130) qui commande la source de lumière (10 ; 150) pour l'émission d'impulsions lumineuses et commande le dispositif de détection (20 ; 160) pour la détection de la lumière réfléchie par l'environnement ainsi qu'évalue les signaux détectés du dispositif de détection (20 ; 160),
dans lequel le dispositif de commande et d'évaluation (30 ; 130), le dispositif de détection (20 ; 160) et la source de lumière (10 ; 150) sont réalisés ensemble en tant que structure temps-de-vol (structure ToF ou Time-of-Flight) pour la détection dans une première direction spatiale, de sorte que des données de distance pouvant être associées spatialement sont détectées,
dans lequel la source de lumière (10 ; 150) et le dispositif de détection (20 ; 160) sont disposés dans un logement réalisé pour le montage du dispositif capteur au niveau d'un véhicule, dans lequel le logement doit être disposé le long d'une surface d'appui du véhicule,
dans lequel la source de lumière est disposée de manière basculée à l'intérieur du logement de sorte qu'entre une normale à la surface d'appui et l'axe optique de la source lumineuse, un angle d'au moins 5° est formé,
**caractérisé en ce que** la source de lumière et le dispositif de détection sont appliqués sur une carte de circuits imprimés partiellement flexible, dans lequel la partie portant la source de lumière de la carte de circuits imprimés est fixée selon un angle d'inclinaison par rapport à une autre partie de la carte de circuits imprimés.

2. Dispositif capteur selon la revendication 1, dans lequel un profilé porteur est disposé dans le logement, lequel présente au moins une partie de support s'étendant en biais pour la source de lumière et tient celle-ci dans la position d'inclinaison.

3. Dispositif capteur selon la revendication 1, dans lequel le dispositif de détection est également fixé sur la partie inclinée, et portant la source de lumière, de la carte de circuits imprimés.

4. Dispositif capteur selon l'une des revendications précédentes, dans lequel la source de lumière présente des composants optiques pour la formation de rayons, dans lequel au moins l'un des composants est formé par un élément optique diffractif.

5. Dispositif capteur selon l'une des revendications précédentes, dans lequel la source de lumière présente un dispositif séparateur de faisceau qui sépare la lumière émise en zones discontinues d'angle solide.

6. Dispositif capteur selon l'une des revendications précédentes, dans lequel la source de lumière présente, en guise de composant optique, au moins une lentille liquide.

7. Dispositif capteur selon la revendication 6, dans lequel la lentille liquide est couplée avec le dispositif de commande et d'évaluation pour procéder à une formation de faisceau de la source de lumière dépendante de la commande.

8. Dispositif capteur selon l'une des revendications précédentes, dans lequel au moins un filtre optique est monté en amont du dispositif de détection, en particulier un filtre infrarouge ou un filtre de polarisation.

9. Dispositif capteur selon l'une des revendications précédentes, dans lequel l'angle d'inclinaison est compris entre 5° et 30°, de préférence entre 5° et 20°.
